(19) Europäisches Patentamt / European Patent Office / Office européen des brevets

(11) EP 3 526 272 B1

(12) **EUROPEAN PATENT SPECIFICATION**

(45) Date of publication and mention of the grant of the patent:
**23.08.2023 Bulletin 2023/34**

(21) Application number: **17787836.0**

(22) Date of filing: **10.10.2017**

(51) International Patent Classification (IPC):
***C08G 63/181*** *(2006.01)* ***C08G 63/78*** *(2006.01)*

(52) Cooperative Patent Classification (CPC):
**C08G 63/181; C08G 63/78**

(86) International application number:
**PCT/US2017/055880**

(87) International publication number:
**WO 2018/071383 (19.04.2018 Gazette 2018/16)**

(54) **PROCESS FOR PREPARING POLY(TRIMETHYLENE FURANDICARBOXYLATE)**

VERFAHREN ZUR HERSTELLUNG VON POLY(TRIMETHYLENFURANDICARBOXYLAT)

PROCÉDÉ DE PRÉPARATION DE POLY(FURANNEDICARBOXYLATE DE TRIMÉTHYLÈNE)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2016 US 201662408095 P**

(43) Date of publication of application:
**21.08.2019 Bulletin 2019/34**

(60) Divisional application:
**23161393.6**

(73) Proprietor: **Covation Inc.**
**Newark, DE 19713 (US)**

(72) Inventors:
- **LIAUW, Ann Y.**
  **Wilmington**
  **Delaware 19803 (US)**
- **POLADI, Raja Hari**
  **Bear**
  **Delaware 19702 (US)**
- **SUNKARA, Hari Babu**
  **Hockessin**
  **Delaware 19707 (US)**

(74) Representative: **Mewburn Ellis LLP**
**Aurora Building**
**Counterslip**
**Bristol BS1 6BX (GB)**

(56) References cited:
**WO-A1-2013/149222 WO-A1-2015/095473**
**WO-A2-2015/095466**

- **SHANMUGAM THIYAGARAJAN ET AL: "Biobased furandicarboxylic acids (FDCAs): effects of isomeric substitution on polyester synthesis and properties", GREEN CHEMI, ROYAL SOCIETY OF CHEMISTRY, GB, vol. 16, 1 January 2014 (2014-01-01), pages 1957-1966, XP007923219, ISSN: 1463-9262, DOI: 10.1039/C3GC42184H**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 526 272 B1

## Description

### FIELD OF THE DISCLOSURE

The disclosure herein relates a composition comprising poly(trimethylene furandicarboxylate) and processes for making the poly(trimethylene furandicarboxylate) of the composition.

### BACKGROUND

Polyesters are an important class of industrially significant polymers. Polyesters find uses in many industries, including apparel, carpets, packaging films, paints, electronics, and transportation. Typically, polyesters are produced by the condensation of one or more diacids or diesters thereof with one or more diols, wherein the starting materials are derived from petroleum.

Poly(trimethylene furandicarboxylate) (PTF) is an important new polymer, wherein the starting materials furan dicarboxylic acid or an ester thereof and 1 ,3-propanediol, can be produced from biomass feedstock. The furan dicarboxylic acid (FDCA) can be produced from the oxidation of hydroxymethyl furfural (which is readily available from a number of sources, for example, biomass and/or high fructose corn syrup) and 1,3-propanediol can be produced by the fermentation of sugar. Both of these materials are renewable materials that are beginning to be produced in industrially significant amounts.

While PTF can be made from 100% renewable materials, the production of the polymer has presented significant challenges. Some of the challenges are (i) producing polymer from melt polymerization with desired molecular weight, high stability and low in color, (ii) the polymer prepared from melt polymerization is mostly amorphous without having melt temperature, (iii) the melt polymer can be crystallizable by heating, nonetheless the rate of crystallization of the polymer is very slow, (iv) due to low melting temperature of the crystallizable polymer and relatively low volatility of the 1,3-propanediol by-product, the solid state polymerization to build high molecular weight from the melt polymer is very time consuming and this step is quite expensive. An improved PTF polymer composition having higher molecular weight, higher stability, faster crystallization rates and improved color, and methods for making such PTF polymer from the melt polymerization are needed.

WO2015/095466 discloses compositions comprising one or more of PTF, a plasticizer, a nucleating agent and copolyesters of PTF comprising furandicarboxylic acid-poly(alkylene ether) glycol soft segment and a PTF hard segment.

### SUMMARY

Disclosed herein is a composition comprising: poly(trimethylene furandicarboxylate) polymer comprising:

i) 95 to 99.9% by weight of trimethylene furandicarboxylate repeat units;
ii) less than or equal to 1 % by weight of di-PDO repeat units in the polymer backbone;
iii) less than or equal to 20 milliequivalents of allyl end group per kilogram of polymer;
iv) less than or equal to 25 milliequivalents of carboxylic acid end groups per kilogram of polymer;
v) less than or equal to 15 milliequivalents of alkyl ester end groups per kilogram of polymer;
vi) less than or equal to 1 % by weight of cyclic dimer oligoester;
vii) less than or equal to 10 milliequivalents of di-PDO end groups per kilogram of polymer; and
viii) an intrinsic viscosity in the range of from 0.60 to 1.2 dL/g; wherein the percentages by weight are based on the total weight of the poly(trimethylene furandicarboxylate) polymer in the composition.

In another embodiment, the poly(trimethylene furandicarboxylate) polymer is poly(trimethylene 2,5-furandicarboxylate) and the alkyl ester end groups are dimethyl ester groups.

In yet another embodiment, the poly(trimethylene 2,5-furandicarboxylate) polymer has a crystallization half time measured at 120°C is less than or equal to 100 minutes.

In one embodiment, the composition has a b* color value of less than or equal to 15, as determined by spectrocolorimetry. In another embodiment, the composition has a b* color value of less than 10, as determined by spectrocolorimetry. In yet another embodiment, the composition has an L* color value greater than or equal to 60, as determined by spectrocolorimetry. In one embodiment, the furandicarboxylic acid dialkyl ester is 2,5-furandicarboxylate dimethyl ester.

In an additional embodiment, the composition further comprises one or more additives comprising a thermal stabilizer, a UV absorber, an antioxidant, a nucleating agent, a process aid, a toner/optical brightener, an oxygen barrier additive, a chain extender, a chain terminator, a reheat agent, or a light blocking agent.

Also disclosed herein is a process comprising:

a) contacting a mixture comprising furandicarboxylic acid dialkyl ester, 1,3-propanediol, and a metal catalyst at a temperature in the range of from 160°C to 220°C to form a prepolymer,

wherein the mole ratio of the furandicarboxylic acid dialkyl ester to the 1,3-propanediol is in the range of from 1:1.3 to 1:2.2 and
the concentration of metal catalyst is in the range of from 20 ppm to 400 ppm, based on the total weight of the mixture;

b) removing at least a portion of the unreacted 1,3-propanediol; and
c) heating the prepolymer to a temperature in the range of from 230°C to 260°C under reduced pressure to form poly(trimethylene furandicarboxylate) polymer while removing 1,3-propanediol.

In one embodiment, the process is batch, semi-continuous, or continuous. At least 50% by weight of the excess 1,3-propanediol is removed in step b). In yet another embodiment, at least 90% by weight of the excess 1,3-propanediol is removed in step b).
In a further embodiment, step a) further comprises concurrently removing at least a portion of the alkyl alcohol formed. In an additional embodiment, the process further comprises step d) crystallizing the poly(trimethylene furandicarboxylate) polymer at a temperature in the range of from about 110 °C to about 130 °C to obtain crystallized poly(trimethylene furandicarboxylate) polymer.
A poly(trimethylene furandicarboxylate) polymer may be obtained by the process disclosed herein.
A poly(trimethylene furandicarboxylate) polymer obtained by the process disclosed herein may comprise:

i) 95 to 99.9% by weight of trimethylene furandicarboxylate repeat units;
ii) less than or equal to 20 milliequivalents of allyl end group per kilogram of polymer;
iii) less than or equal to 15 milliequivalents of carboxylic acid end groups per kilogram of polymer;
iv) less than or equal to 1 % by weight of di-PDO repeat units in the polymer backbone;
v) less than or equal to 10 milliequivalents of alkyl ester end groups per kilogram of polymer;
vi) less than or equal to 1 % by weight of cyclic dimer oligoester;
vii) less than or equal to 10 milliequivalents of di-PDO end groups per kilogram of polymer; and
viii) an intrinsic viscosity in the range of from 0.60 to 1.20 dL/g; wherein the percentages by weight are based on the total weight of the poly(trimethylene furandicarboxylate) polymer.

In an embodiment the composition comprises: poly(trimethylene furandicarboxylate) polymer comprising:

i) 95 to 99.9% by weight of trimethylene furandicarboxylate repeat units;
ii) less than or equal to 1 % by weight of di-PDO repeat units in the polymer backbone;
iii) less than or equal to 20 milliequivalents of allyl end group per kilogram of polymer;
iv) less than or equal to 15 milliequivalents of carboxylic acid end groups per kilogram of polymer;
v) less than or equal to 10 milliequivalents of alkyl ester end groups per kilogram of polymer;
vi) less than or equal to 1 % by weight of cyclic dimer oligoester;
vii) less than or equal to 10 milliequivalents of di-PDO end groups per kilogram of polymer; and
viii) an intrinsic viscosity in the range of from 0.70 to 1.2 dL/g; wherein the percentages by weight are based on the total weight of the poly(trimethylene furandicarboxylate) polymer in the composition.

In one embodiment, the furandicarboxylic acid dialkyl ester is 2,5-furandicarboxylate dimethyl ester.
In yet another embodiment, the poly(trimethylene 2,5-furandicarboxylate) polymer has a crystallization half time measured at 120°C is less than or equal to 100 minutes.
In one embodiment, the composition has a b* color value of less than or equal to 15, as determined by spectrocolorimetry. In another embodiment, the composition has a b* color value of less than 10, as determined by spectrocolorimetry. In yet another embodiment, the composition has an L* color value greater than or equal to 60, as determined by spectrocolorimetry. In one embodiment, the poly(trimethylene furandicarboxylate) polymer is poly(trimethylene 2,5-furandicarboxylate) and the alkyl ester end groups are dimethyl ester groups.
In an additional embodiment, the composition further comprises one or more additives comprising a thermal stabilizer, a UV absorber, an antioxidant, a nucleating agent, a process aid, a toner/optical brightener, an oxygen barrier additive, a chain extender, a chain terminator, a reheat agent, or a light blocking agent.
A poly(trimethylene furandicarboxylate) polymer obtained by the process disclosed herein may comprise:

ix) 95 to 99.9% by weight of trimethylene furandicarboxylate repeat units;

x) less than or equal to 20 milliequivalents of allyl end group per kilogram of polymer;
xi) less than or equal to 25 milliequivalents of carboxylic acid end groups per kilogram of polymer;
xii) less than or equal to 1 % by weight of di-PDO repeat units in the polymer backbone;
xiii) less than or equal to 15 milliequivalents of alkyl ester end groups per kilogram of polymer;
xiv) less than or equal to 1 % by weight of cyclic dimer oligoester;
xv) less than or equal to 10 milliequivalents of di-PDO end groups per kilogram of polymer; and
xvi) an intrinsic viscosity in the range of from 0.60 to 1.20 dL/g; wherein the percentages by weight are based on the total weight of the poly(trimethylene furandicarboxylate) polymer.

## DETAILED DESCRIPTION

As used herein, the term "embodiment" or "disclosure" is not meant to be limiting, but applies generally to any of the embodiments defined in the claims or described herein. These terms are used interchangeably herein.

In this disclosure, a number of terms and abbreviations are used. The following definitions apply unless specifically stated otherwise.

The articles "a", "an", and "the" preceding an element or component are intended to be non restrictive regarding the number of instances (i.e. occurrences) of the element or component. There "a", "an", and "the" should be read to include one or at least one, and the singular word form of the element or component also includes the plural unless the number is obviously meant to be singular.

The term "comprising" means the presence of the stated features, integers, steps, or components as referred to in the claims, but that it does not preclude the presence or addition of one or more other features, integers, steps, components, or groups thereof. The term "comprising" is intended to include embodiments encompassed by the terms "consisting essentially of" and "consisting of". Similarly, the term "consisting essentially of" is intended to include embodiments encompassed by the term "consisting of".

As used herein in connection with a numerical value, the term "about" refers to a range of +/- 0.5 of the numerical value, unless the term is otherwise specifically defined in context. For instance, the phrase a "pH value of about 6" refers to pH values of from 5.5 to 6.5, unless the pH value is specifically defined otherwise.

The features and advantages of the present disclosure will be more readily understood, by those of ordinary skill in the art from reading the following detailed description. It is to be appreciated that certain features of the disclosure, which are, for clarity, described above and below in the context of separate embodiments, may also be provided in combination in a single element. Conversely, various features of the disclosure that are, for brevity, described in the context of a single embodiment, may also be provided separately or in any sub-combination. In addition, references to the singular may also include the plural (for example, "a" and "an" may refer to one or more) unless the context specifically states otherwise.

The use of numerical values in the various ranges specified in this application, unless expressly indicated otherwise, are stated as approximations as though the minimum and maximum values within the stated ranges were both proceeded by the word "about". In this manner, slight variations above and below the stated ranges can be used to achieve substantially the same results as values within the ranges. Also, the disclosure of these ranges is intended as a continuous range including each and every value between the minimum and maximum values.

As used herein:

The phrase "poly(trimethylene furandicarboxylate)" or PTF means a polymer comprising repeat units derived from 1,3-propanediol and furan dicarboxylic acid. In some embodiments, the poly(trimethylene furandicarboxylate) comprises greater than or equal to 95 mole% of repeat units derived from 1,3-propanediol and furan dicarboxylic acid. In still further embodiments, the mole% of the 1,3-propanediol and furan dicarboxylic acid repeat units is greater than or equal to 95 or 96 or 97 or 98 or 99 mole%, wherein the mole percentages are based on the total amount of monomers that form the poly(trimethylene furandicarboxylate). In some embodiments, the furan dicarboxylic acid is 2,3-furan dicarboxylic acid, 2,4-furan dicarboxylic acid, 2,5-furan dicarboxylic acid, or a combination thereof. In other embodiments, the furan dicarboxylic acid is 2,5-furan dicarboxylic acid.

The term "trimethylene furandicarboxylate repeat unit" means a polymer having as the repeating unit a structure consisting of alternating furandicarboxylate and $-CH_2CH_2CH_2O-$ groups, wherein "furandicarboxylate" encompasses furan-2,3-dicarboxylate, furan-2,4-dicarboxylate, and furan-2,5-dicarboxylate. The molecular weight of this repeat unit is 196 g/mole. The term "trimethylene furan-2,5-dicarboxylate repeat unit" means a polymer having as the repeating unit a structure consisting of alternating furan-2,5-dicarboxylate and $-CH_2CH_2CH_2O-$groups, according to Formula (I):

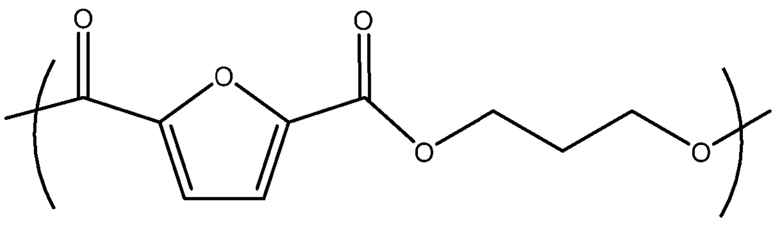

Formula (I).

Similarly, the term "trimethylene furan-2,4-dicarboxylate repeat unit" means a polymer having as the repeating unit a structure consisting of alternating furan-2,4-dicarboxylate and $-CH_2CH_2CH_2O-$ groups, and the term "trimethylene furan-2,3-dicarboxylate repeat unit" means a polymer having as the repeating unit a structure consisting of alternating furan-2,3-dicarboxylate and $-CH_2CH_2CH_2O-$ groups.

The number of trimethylene furandicarboxylate repeat units in the polymer can vary, depending upon the intrinsic viscosity.

The phrases "polymer backbone" and "main chain of polymer" are used interchangeably herein and mean two or more monomer units linked covalently together create a continuous chain of polymer.

The phrase "end group" as used herein means a reactive or unreactive functional group present at an end of the polymer backbone.

The phrase "di-propanediol" or "di-PDO" repeat unit or end group of a polymer means a unit having a structure according to Formula (II):

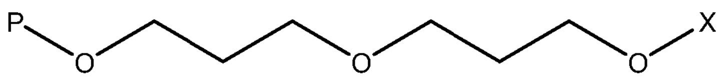

Formula (II)

wherein P is the poly(trimethylene furandicarboxylate) and X is P or hydrogen. The di-PDO group can be an end group wherein X is hydrogen, or the di-PDO group can be a repeat unit within the polymer backbone wherein X is P.

The phrase "allyl end group" means an allyl group at the end of a poly(trimethylene furandicarboxylate) polymer, for example according to Formula (III):

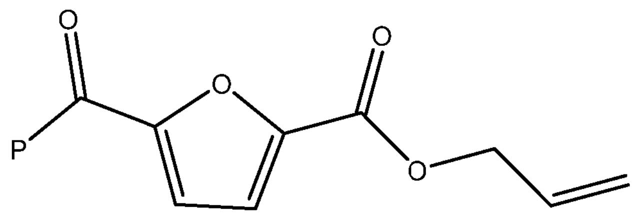

Formula (III)

wherein P represents the poly(trimethylene furandicarboxylate) polymer.

The phrase "alkyl ester end group" means an alkyl ester group at the end of a poly(trimethylene furandicarboxylate) polymer. In some embodiments, the alkyl end group can be methyl, ethyl, propyl, or butyl. The phrase "hydroxyl end groups" means a hydroxyl group at the end of a poly(trimethylene furandicarboxylate) polymer. The phrase "carboxylic acid end groups" means a carboxylic acid group at the end of a poly(trimethylene furandicarboxylate) polymer.

The phrase "cyclic oligoester" means a cyclic compound composed of from two to eight repeating units of a structure according to Formula (I). The phrase "cyclic dimer oligoester" means a dimer having a structure according to Formula (IV):

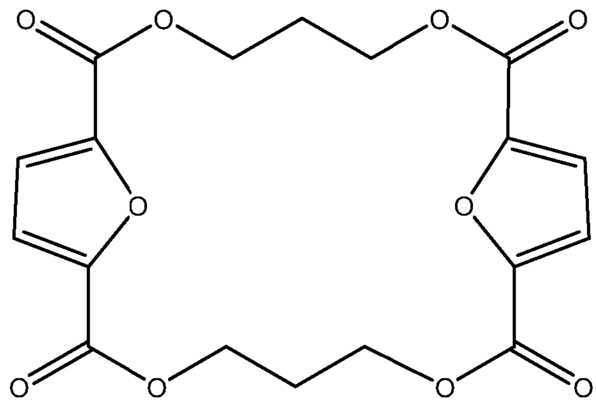

Formula (IV).

Other cyclic oligoesters include trimers, tetramers, pentamers, hexamers, heptamers, and octamers of the repeat unit of Formula (I).

The phrase "furan dicarboxylic acid" encompasses 2,3-furan dicarboxylic acid; 2,4-furan dicarboxylic acid; and 2,5-furan dicarboxylic acid. In one embodiment, the furan dicarboxylic acid is 2,3-furan dicarboxylic acid. In one embodiment, the furan dicarboxylic acid is 2,4-furan dicarboxylic acid. In one embodiment, the furan dicarboxylic acid is 2,5-furan dicarboxylic acid.

The phrase "furandicarboxylate dialkyl ester" means a dialkyl ester of furan dicarboxylic acid. In some embodiments, the furandicarboxylate dialkyl ester can have a structure according to Formula (V):

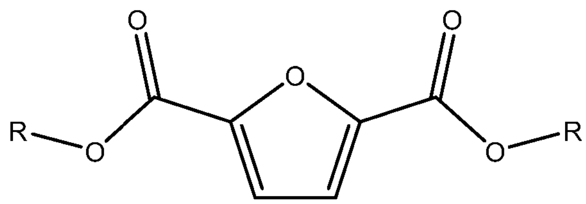

Formula (V)

wherein each R is independently $C_1$ to Ca alkyl. In some embodiments, each R is independently methyl, ethyl, or propyl. In another embodiment, each R is methyl, and the furan dicarboxylate dialkyl ester is 2,5-furan dicarboxylic dimethyl ester (FDME). In yet another embodiment, each R is ethyl, and the furan dicarboxylate dialkyl ester is 2,5-furan dicarboxylic diethyl ester.

The terms "a* value", "b* value", and "L* value" mean a color according to CIE L*a*b* color space. The a* value represents the degree of red color (positive values) or the degree of green color (negative values). The b* value indicates the degree of yellow color (positive values) or the degree of blue color (negative values). The L* value represents the lightness of the color space wherein 0 indicates a black color and 100 refers to a diffuse white color.

The term "prepolymer" means a relatively low molecular weight compound or oligomer having at least one trimethylene furandicarboxylate repeat unit. Typically, prepolymer has a molecular weight in the range of from about 196 to about 6000 g/mole. The smallest prepolymer will generally be bis(1,3-propanediol) furandicarboxylate while the largest may have in the range of from 2 to 30 trimethylene furandicarboxylate repeat units. In an embodiment, the prepolymer has a molecular weight in the range of from about 214 to about 6000 g/mole.

The phrase "removing at least a portion of" means a process wherein at least 50% by weight of the recited component is removed from an initial mixture comprising the component before the removal process has begun. In other embodiments, at least 60% or 70% or 80% or 90% or 91 % or 92% or 93% or 94% or 95% or 96% or 97% or 98% or 99% or 99.5% or 99.9% of the recited component is removed. The percentages by weight are based on the excess amount of the recited component before the removal process has begun.

As used herein, "weight average molecular weight" or "$M_w$" is calculated as

$$M_w = \Sigma N_i M_i^2 / \Sigma N_i M_i;$$ where $M_i$ is the molecular weight of a chain

where $M_i$ is the molecular weight of a chain and $N_i$ is the number of chains of that molecular weight. The weight average molecular weight can be determined by techniques such as gas chromatography (GC), high pressure liquid chromatography (HPLC), and gel permeation chromatography (GPC).

As used herein, "number average molecular weight" or "$M_n$" refers to the statistical average molecular weight of all the polymer chains in a sample. The number average molecular weight is calculated as $M_n = \Sigma N_i M_i / \Sigma N_i$ where $M_i$ is the molecular weight of a chain and $N_i$ is the number of chains of that molecular weight. The number average molecular weight of a polymer can be determined by techniques such as gel permeation chromatography, viscometry via the (Mark-Houwink equation), and colligative methods such as vapor pressure osmometry, end-group determination, or proton NMR.

In some embodiments, the disclosure relates to a composition comprising:
poly(trimethylene furandicarboxylate) polymer comprising:

i) 95% to 99.9% by weight of trimethylene furandicarboxylate repeat units;
ii) less than or equal to 1 % by weight of di-PDO repeat units in the polymer backbone;
iii) less than or equal to 20 milliequivalents (meq) of allyl end groups per kilogram of polymer;
iv) less than or equal to 15 meq of carboxylic acid end groups per kilogram of polymer;
v) less than or equal to 10 meq of alkyl ester end groups per kilogram of polymer;
vi) less than or equal to 1.0% by weight of at least one cyclic oligoester; and
vii) less than or equal to 10 meq of di-PDO end groups per kilogram of polymer; and
viii) an intrinsic viscosity in the range of from 0.70 to 1.2 dL/g; wherein the percentages of weight are based on the total weight of the poly(trimethylene furandicarboxylate) polymer in the composition.

The poly(trimethylene furandicarboxylate) polymer can be produced by a process comprising:

a) contacting a mixture comprising furandicarboxylic acid dialkyl ester, 1,3-propanediol, and a metal catalyst at a temperature in the range of from 160°C to 220°C to form a prepolymer, wherein the mole ratio of the furandicarboxylic acid dialkyl ester to the 1,3-propanediol is in the range of from 1 to 1.3 up to 1 to 2.2 and the concentration of metal catalyst is in the range of from 20 ppm to 200 ppm, based on the total weight of the mixture;
b) removing at least a portion of the unreacted 1,3-propanediol; and
c) heating the prepolymer to a temperature in the range of from 230°C to 260°C and under reduced pressure to form poly(trimethylene furandicarboxylate) while removing 1,3-propanediol ;
wherein at least 50% by weight of the excess 1 ,3-propanediol is removed in step b).

The percentage of weight of the trimethylene furandicarboxylate repeat unit, the amount of di-PDO repeat units in the polymer backbone, the type and amounts of end groups, and the cyclic oligoester groups can be determined by proton NMR, for example, The amount of carboxylic acid end groups can also be determined by proton NMR, for example, by derivatizing the carboxylic acid end groups with trifluoroacetic anhydride or by titration.

The percentage of trimethylene furandicarboxylate repeat units is in the range of from 95 to 99.9% by weight, based on the total amount of poly(trimethylene furandicarboxylate) in the composition. In other embodiments, the trimethylene furandicarboxylate repeat units can be present in a range of from 96 to 99.9% or 97 to 99.9% or 98 to 99.9% or 99 to 99.9% by weight All percentages are based on the total weight of the poly(trimethylene furandicarboxylate) in the composition.

In some embodiments, the poly(trimethylene furandicarboxylate) polymer has a b* color value of less than 15, as determined by spectrocolorimetry. The poly(trimethylene furandicarboxylate) polymer has an intrinsic viscosity in the range of from 0.60 to 1.2 dL/g. In some embodiments, the L* color value of the poly(trimethylene furandicarboxylate) is greater than 60. In some embodiments, the poly(trimethylene furandicarboxylate) polymer has a crystallization half time (t1/2) measured at 120°C of less than or equal to 100 minutes, for example less than 50 minutes, or less than 40 minutes, or less than 35 minutes.

Like other polyesters, the properties of the poly(trimethylene-2,5-furandicarboxylate) polymer (PTF) depend on its structure, composition, molecular weight, and crystallinity characteristics, for example. In addition, the process conditions, the type and amount of the catalyst and additives also alter the properties of the polymer. n general, the higher the molecular weight the better the mechanical properties. In many processes for making high molecular weight polyesters, the polyester is prepared in a two stage melt polymerization which includes direct esterification or ester exchange (transesterification) and polycondensation at temperature(s) higher than the melt temperature of the final polymer. The first transesterification/polycondensation stage can then be followed by solid state polymerization at temperature(s) below the melt temperature of the polymer. However, because the melt temperature of the crystallized PTF polymer is relatively low (<18°C) and the boiling point of the reaction byproduct, 1,3-propanediol, is high (214°C), it takes much longer time to build high molecular weight in a solid state polymerization step, which makes the solid state polymerization process expensive, less productive, and impractical.

As disclosed herein, PTF polymer having an intrinsic viscosity of 0.70 to 1.2 dL/g and/or a number average molecular weight of at least 15,000 g/mole is prepared in a melt polymerization process and without solid state polymerization. Also disclosed herein, PTF polymer having an intrinsic viscosity of 0.60 to 1.2 dL/g In some embodiments, the process can be a continuous process. In other embodiments, the process can be a batch process, or a semi-batch process.

The molecular weight of the PTF polymer can be measured by different techniques, for example proton NMR that provides the number average molecular weight from end group analysis, size exclusion chromatography that provides the number average and weight average molecular weights, and intrinsic viscosity. The intrinsic viscosity of the PTF polymer produced according to the disclosed process can be measured by standard methods, for example as disclosed in the Experimental Section herein below, and can be in the range of from 0.70 to 1.20 dL/g. In other embodiments, the intrinsic viscosity can be in the range of from 0.60 to 1.20dL/g or 0.70 to 1.00 dL/g, or 0.70 to 0.90 dL/g, or 0.70 to 0.80 dL/g or 0.65 to 1.00 dL/g, or 0.70 to 0.95 dL/g, or 0.70 to 0.90. The number average molecular weight ($M_n$) of the PTF polymer produced according to the process of the disclosure can be in the range of from 15,000 to 40,000 g/mole. In other embodiments, the number average molecular weight can be in the range of from 12,000 to 40,000 g/mole or 15,000 to 30,000 g/mole or 15,000 to 25,000 g/mole. The weight average molecular weight ($M_w$) of the PTF polymer can be in the range of from 24,000 to 80,000 g/mole, or 30,000 to 80,000 g/mole, or 30,000 to 70,000 g/mole or 30,000 to 60,000 g/mole.

Differential Scanning Calorimetry (DSC) shows that the PTF polymer prepared using the disclosed melt polymerization process has no melting point when the polymer sample is heated at 10 °C/min, which indicates that the polymer is mostly in the amorphous state. In order to produce a crystallized PTF polymer, the amorphous PTF polymer is heated to the cold crystallization temperature, for example, heating to a temperature in the range of from 100 to 130°C, to obtain a crystallized PTF polymer from which the melting point can be determined. The melting temperature of crystallized PTF polymer depends on the molecular structure of repeat unit !, and the crystallization rate and morphology. As the molecular weight of the PTF polymer increases, the crystallization rate decreases and therefore the melt temperature decreases. The melt temperature ($T_m$) and enthalpy or heat of fusion ($\Delta H_m$) of the formed crystals are measured from heat-cool and heat cycles of DSC. The heat of fusion of the pure crystalline polymer is an important parameter which can be used along with the theoretical heat of melting for 100% crystalline PTF for the estimation of the degree of crystallinity of the polymer. The percent crystallinity is directly related to many of the key properties exhibited by a semi-crystalline polymer including: brittleness, toughness, stiffness or modulus, optical clarity, creep or cold flow, barrier resistance (ability to prevent gas transfer in or out) and long term stability.

The crystallized PTF polymer can have a broad melt temperature range with multiple peaks in DSC when the polymer is heated at 10°C/min whereas a single, narrow peak can be obtained when the polymer is heated at very slow rate, for example 1 °C/min. The melting temperature of the major peak of the crystallized PTF polymer is measured from the first heating DSC scan and is in the range from 155 to 185°C, preferably from 165 to 185°C. The glass transition temperature of the polymer is taken in the second heating DSC scan at 10°C/min rate and is within the range of 57 to 62°C.

Physical, mechanical, and optical properties of crystalline PTF are strongly dependent on the morphological features of the polymer, for example, the polymer size, shape, perfection, orientation, and/or volume fraction. Crystallization rates are typically expressed through the use of isothermal crystallization half-time (t1/2) values in units of minutes or seconds at a specific temperature and can be obtained from DSC experiments. The isothermal crystallization temperatures are between the glass transition temperature ($T_g$) and melting point ($T_m$) of the PTF polymer and can be measured at various temperatures ranging from 70-160 °C. The subsequent DSC heating traces after isothermal melt crystallization can provide information on the melting behavior of the polymer. The crystallization half-times and the crystallization rates depend on factors such as crystallization temperature, the average molecular weight, molecular weight distribution, the chain structure of the polymer, presence of any comonomer, nucleating agents, and plasticizers. Increasing the molecular weight in the melt polymerization process decreases the crystallization rate, and therefore the polymer as prepared from a melt is mostly amorphous. In general, polymers having a slow crystallization rate find limited use in engineering and packaging applications.

1,3-Propanediol dimer (di-PDO) is a diol ether generated from 1,3-propane glycol via an acid catalyzed side reaction between the two diol molecules or a diol and diol end of the prepolymer or polymer. In general, the amount of the ether present in the polymer backbone is generally small (< 1wt%) when the monomer is a dialkyl ester than dicarboxylic acid. To our surprise, the amount of ether present in the polytrimethylene furandicarboxylate prepared from 2,5-furandicarboxylic dimethylester is unexpectedly high (more than 3 wt%). As 1 ,3-propanediol dimer (di-PDO) in the polymer backbone can negatively affect the structure and properties of the PTF polymer. For example, the depending on the amount of ether in the polymer backbone, its glass transition temperature, melting temperature can be lower, degree of crystallinity and crystallization rates can be lower and thermal and thermoxidative stability can be lower,

generation of color chromophores and acrelein can be higher PTF polymer having low di-PDO content is desired. PTF polymer prepared according to the melt polymerization process disclosed herein can contain very low levels of di-PDO in the polymer backbone, for example less than about 2 percent by weight, based on the total weight of the poly(trimethylene furandicarboxylate) polymer without adding any additives to suppress the ether formation. The PTF polymer of the invention comprises
less than or equal to 1 % by weight of di-PDO repeat units in the polymer backbone, or may comprise less than or equal to 0.5% by weight of di-PDO repeat units in the polymer backbone, wherein the percentages by weight are based on the total weight of the polymer.

Polyesters prepared from melt polymerization processes are known to comprise cyclic oligomeric esters as an impurity. In case of poly(ethylene terephthalate), the majority of cyclic oligomeric ester is cyclic trimer typically present at levels of 2 to 4% by weight. In contrast, in the case of poly(trimethylene terephthalate) the major species of cyclic oligomeric ester is the cyclic dimer, which can be present in the polymer at 2.5% by weight or more. Cyclic oligomeric ester impurities can be problematic during polymerization, processing, and in end-use applications such as injection molded parts, apparel fibers, filaments, and films. Lowering cyclic oligomeric ester concentrations in the polymer could positively impact polymer production, for example by extended wipe cycle times during fiber spinning, reduced oligomer blooming of injection molded parts, and reduced blushing of films.

One way to reduce the content of the cyclic oligomeric esters in polyesters such as poly(ethylene terephthalate) and poly(trimethylene terephthalate) is by utilizing solid state polymerization. However, we have surprisingly found that the high molecular weight PTF polymer obtained from the melt polymerization process disclosed herein contains very low levels of cyclic oligoester even without a solid state polymerization step. The major cyclic oligoester in PTF polymer is the cyclic dimer. The total amount of cyclic esters, including dimer, in the polymer can be determined from proton NMR analysis as described in the Experimental Section. PTF polymer obtained by the process disclosed herein can comprise less than 1% by weight, or less than 0.5% by weight, of cyclic dimer oligoester, based on the total weight of the PTF polymer. The amount of cyclic oligoester in the can be less than 1.0% by weight, based on the total weight of the poly(trimethylene furandicarboxylate) polymer. In other embodiments, the amount of cyclic oligoester can be less than 0.9 or 0.8 or 0.7 or 0.6 or 0.5 or 0.4 or 0.3 or 0.2 or 0.1% by weight, based on the total weight of the poly(trimethylene furandicarboxylate) polymer.

The poly(trimethylene furandicarboxylate) polymer can comprise end groups other than hydroxyl groups, for example, allyl, carboxylic acid, decarboxylic acid, alkylester, aldehyde and ether end groups resulting from thermal or thermo-oxidative degradation of polymer chains, other side reactions during melt polymerization conditions, and impurities in the monomer(s). The PTF polymer prepared according to the present disclosure has majority of hydroxyl ends and relatively low amounts of these other end groups.

In one embodiment, in step a) of the process a mixture consisting of, or consisting essentially of, furan dicarboxylic acid dialkyl ester, 1,3-propanediol, and a metal catalyst is contacted at a temperature in the range of from 160°C to 220°C to form a prepolymer. By "consisting essentially of" is meant that less or equal to 1% by weight of other diester, diacid, or polyol monomers, that are not the furan dicarboxylate ester or 1,3-propanediol, are present in the mixture. In other embodiments, the mixture contacted in the first step is free from or essentially free from acid functional components, for example, acid functional monomers such as furandicarboxylic acid. As used herein, "essentially free from" means that the mixture comprises less than 5% by weight of acid functional monomers, based on the total weight of monomers in the mixture. In other embodiments, the amount of acid functional monomers is less than 4% or 3% or 2% or 1% or the amount of acid functional monomers is 0%. It has been found that the presence of acids during the polymerization process can lead to increased color in the final poly(trimethylene furandicarboxylate), therefore, the amount of acid should be kept as low as possible.

The furandicarboxylic acid dialkyl ester can be any of the diesters known, for example, furandicarboxylic acid dialkyl esters having from 1 to 8 carbon atoms in the ester group. The term "furandicarboxylic acid dialkyl ester" is used interchangeably herein with the term "furandicarboxylate dialkyl ester". In some embodiments, the furandicarboxylate dialkyl esters are furandicarboxylate dimethyl ester, furandicarboxylate diethyl ester, furandicarboxylate dipropyl ester, furandicarboxylate dibutyl ester, furandicarboxylate dipentyl ester, furandicarboxylate dihexyl ester, furandicarboxylate diheptyl ester, furandicarboxylate dioctyl ester or a combination thereof. In other embodiments, the furandicarboxylate dialkyl esters are furandicarboxylate dimethyl ester, furandicarboxylate diethyl ester, or a mixture of furandicarboxylate dimethyl ester and furandicarboxylate diethyl ester. The ester groups of the furandicarboxylate dialkyl esters can be positioned at the 2,3-, 2,4- or 2,5-positions of the furan ring. In some embodiments, the furandicarboxylate dialkyl ester is 2,3-furandicarboxylate dialkyl ester; 2,4-furandicarboxylate dialkyl ester; 2,5-furandicarboxylate dialkyl ester; or a mixture thereof. In still further embodiments, the furandicarboxylate dialkyl ester is 2,5-furandicarboxylate dialkyl ester, while in still further embodiments, it is 2,5-furandicarboxylate dimethyl ester.

In the contacting step, the mole ratio of the furandicarboxylic acid dialkyl ester to the 1,3-propanediol is in the range of from 1:1.3 to 1:2.2. In other words, for every 1 mole of furandicarboxylic acid dialkyl ester, at least 1.3 moles and up to 2.2 moles of 1,3-propanediol can be used. In principle, more than 2.2 moles of 1,3-propanediol can be used

for every 1 mole of furandicarboxylic acid dialkyl ester, however, more than 2.2 moles of 1,3-propanediol provides little benefit and can increase the amount of time and energy required for step b) which is the removal of at least a portion of the unreacted 1,3-propanediol. In other embodiments, the mole ratio of the furandicarboxylic acid dialkyl ester to the 1,3-propanediol can be in the range of from 1:1.3 up to 1:2.1, or from 1:1.3 to 1:2.0. In still further embodiments, the ratio of the furandicarboxylic acid dialkyl ester to the 1,3-propanediol can be in the range of from 1:1.4 up to 1:1.8 or from 1:1.5 up to 1:1.8.

At least one metal catalyst is present in the contacting step. The amount of metal in the metal catalyst is in the range of from 20 parts per million (ppm) to 400 ppm by weight, based on a theoretical yield of 100% of the polymer produced. In other embodiments, the amount of metal catalyst present in the contacting step can be in the range of from 25 to 250 ppm, or from 30 to 200 ppm, or from 20 to 200 ppm, or from 40 to 150 ppm, or from 50 to 100 ppm, wherein the concentration (parts per million), based on the mixture of furandicarboxylic acid dialkylester, 1,3-propanediol, and metal catalyst of the contacting step. Suitable metal catalysts can include, for example, titanium compounds, bismuth compounds such as bismuth oxide, germanium compounds such as germanium dioxide, zirconium compounds such as tetraalkyl zirconates, tin compounds such as butyl stannoic acid, tin oxides and alkyl tins, antimony compounds such as antimony trioxide and antimony triacetate, aluminum compounds such as aluminum carboxylates and alkoxides, inorganic acid salts of aluminum, cobalt compounds such cobalt acetate, manganese compounds such as manganese acetate, zinc compounds such zinc acetate, or a combination thereof. Alternatively, the catalyst can be a tetraalkyl titanate $Ti(OR)_4$, for example tetraisopropyl titanate, tetra-n-butyl titanate, tetrakis(2-ethylhexyl) titanate, titanium chelates such as, acetylacetonate titanate, ethyl acetoacetate titanate, triethanolamine titanate, lactic acid titanate, or a combination thereof. Suitable metal catalysts can be obtained commercially or prepared by known methods.

During the contacting step, the furandicarboxylic acid dialkyl ester is transesterified with the 1 ,3-propanediol resulting in the formation of the bis(1,3-propanediol) furandicarboxylate prepolymer and an alkyl alcohol corresponding to the alcohol of the ester of the furandicarboxylic acid starting material. For example, when furandicarboxylic acid dimethyl ester is used, methanol is formed in addition to the prepolymer. During step a) the alkyl alcohol is removed by distillation. The contacting step can be performed at atmospheric pressure or, in other embodiments, at slightly elevated or reduced pressure. The contacting step is performed at a temperature in the range of from 160°C to 220°C, for example in the range of from 170°C to 215°C or from 180°C to 210°C or from 190°C to 210°C or 165°C to 215°C or from 170°C to 210°C or from 180°C to 210°C..

After formation of the prepolymer, at least a portion of the unreacted 1,3-propanediol is removed from the reaction mixture. Removing the unreacted 1,3-propanediol is typically performed by distillation, for example by reducing the pressure relative to that of the contacting step. In some embodiments, the temperature can be maintained at the temperature range used in the contacting step. In other embodiments, the temperature can be increased to be in the range of about 180 °C to about 220 °C. At least 50% by weight of the unreacted 1,3-propanediol is removed. In other embodiments, at least 60% or 65% or 70% or 75% or 80% or 85% or 90% or 95% or 96% or 97% or 98% or 99% by weight of the unreacted 1,3-propanediol is removed. The amount of unreacted 1,3-propanediol present in the reaction mixture after the contacting step is calculated by subtracting the amount of 1,3-propanediol required to produce the prepolymer from the total amount of 1,3-propanediol added in the contacting step, assuming that the prepolymer is 100% bis(1,3-propanediol) furandicarboxylate, which means that two moles of 1,3-propanediol have reacted with every one mole of the furan dicarboxylic acid dialkyl ester used.

Once at least 50% by weight of the unreacted 1,3-propanediol has been removed, the prepolymer is heated to a temperature in the range of from 230°C to 260°C under reduced pressure to form the poly(trimethylene furandicarboxylate) polymer while removing the byproduct 1,3-propanediol. The temperature is typically in the range of from 230°C to 260°C, for example from 230°C to 255°C or from 230°C to 250°C. The pressure can be from less than about one atmosphere to 0.0001 atmospheres. During step c), the prepolymers undergo polycondensation reactions, increasing the molecular weight of the polymer (as indicated by the increasing intrinsic viscosity) and liberating 1,3-propanediol. Step c) can be continued at a temperature in the range of from 230°C to 260°C for such a time as the intrinsic viscosity of the polymer reaches 0.70 to 1.2 dL/g. The time is typically from 1 hour to several hours, for example 2, 3, 4, 5, 6, 7, 8, 9 or 10 hours or any time in between 1 hour and 10 hours. Once the desired intrinsic viscosity of the polylmer is reached, the reactor and its contents can be cooled, for example to room temperature, to obtain the poly(trimethylene furandicarboxylate) polymer. The 1,3-propanediol removed from step b) and step c) can be recycled to the process, if desired. The process steps a), b) and c) can be conducted in batch, semi-continuous, or continuous melt polymerization reactors.

Optionally, the PTF polymer can then be crystallized at a temperature in the range of from about 110°C to 130°C, preferably from about 115°C to 125°C. It is preferred to crystallize the polymer by ramping the temperature slowly from room temperature to the desired temperature of from about 110°C to 130°C. Typical crystallization times are in the range of from about one hour to several hours at this temperature range. The melting temperature of the polymer can be increased from about 170°C to about 180°C by heating the polymer at slower rate of 1°C per minute vs 10°C minute. Crystallized polymer having a L* value greater than 60 and b* color value less than 15 can be obtained. In some

embodiments, the b* color value can be less than 10. Solid phase polycondensation to increase the intrinsic viscosity to the range of 0.70 to 1.2 dL/g is not needed, although an additional polycondensation step can be utilized if poly(trimethylene furandicarboxylate) polymer having viscosity greater than 1.2 dL/g are desired.

Poly(trimethylene furandicarboxylate) polymer obtained by the processes disclosed herein is relatively free of impurities, especially color forming impurities. A poly(trimethylene furandicarboxylate) polymer obtained by a process disclosed herein may comprise:

i) 95 to 99.9% by weight of trimethylene furandicarboxylate repeat units;
ii) less than or equal to 20 milliequivalents of allyl end group per kilogram of polymer;
iii) less than or equal to 15 milliequivalents of carboxylic acid end groups per kilogram of polymer;
iv) less than or equal to 1 % by weight of di-PDO repeat units in the polymer backbone;
v) less than or equal to 10 milliequivalents of alkyl ester end groups per kilogram of polymer;
vi) less than or equal to 1.0% by weight of cyclic dimer oligoester;
vii) less than or equal to 10 milliequivalents of di-PDO end groups per kilogram of polymer; and
viii) an intrinsic viscosity in the range of from 0.70 to 1.2 dL/g; wherein the percentages by weight are based on the total weight of the poly(trimethylene furandicarboxylate) polymer.

The allyl end groups are thought to be due to the thermal degradation of polymer chains in the polycondensation stage. In some embodiments, the amount of allyl end groups can be less than 20 milliequivalents/kilogram (meq/kg) of polymer, or less than 19, 18 or 17 or 16 or 15 or 14 or 13 or 12 or 11 or 10 meq/kg of polymer.

The carboxylic acid ends are believed to be formed by degradation or side reactions which take place during molecular weight build-up in the later part of the polycondensation stage where the temperature is high. Typically, the higher the molecular weight of the polymer, the higher the carboxylic acid end concentration. The concentration of carboxylic acid ends is relatively lower for solid state polymerized polymer than the melt polymer due to lower polycondensation temperatures. In some embodiments, the amount of carboxylic acid end groups can be less than 15 meq/kg of polymer or less than 14 or 13 or 12 or 11 or 10 or 9 or 8 or 7 or 6 or 5 or 4 or 3 or 2 or 1 meq/kg of polymer.

In order to build high molecular weight of the polymer in the polycondensation stage, it is desirable to transesterify both ester groups of each furandicarboxylate with 1,3-propanediol completely. In some embodiments, the PTF polymer obtained by the process disclosed herein has no alkyl ester end groups as determined by $^1$H NMR spectroscopy. In some embodiments, the amount of alkyl ester end groups in the PTF polymer can be less than 10 meq/kg of polymer. The amount of alkyl ester end groups excludes hydroxy functional trimethylene end groups from 1,3-propanediol. In other embodiments, the alkyl ester end groups can be less than 9 or 8 or 7 or 6 or 5 or 4 or 4 or 3 or 2 or 1 meq/kg of polymer.

The CIE b* color is a measure of both yellow (positive values) and blue (negative values), the b* color value can be less than 0. Typically, it is difficult to produce poly(trimethylene furandicarboxylate) having a b* color value of less than 15 without a further purification step or without an additive to lower the b* color value. Minimizing the amounts of components ii) through vii) listed above to less than or equal to the amounts listed above can provide a poly(trimethylene furandicarboxylate) polymer having a b* color value of less than 15. In some embodiments, the b* color value can be less than 15, 14, 13, 12, 11, 10, 9, 8, 7, 6, 5, 4, 3, 2, or 1. When measuring the b* color value of the poly(trimethylene furandicarboxylate) polymer, the color value should be measured prior to adding any components that may contribute color, with the exception of components that are known to provide lower b* color values, for example, blue pigments or optical brighteners. In one embodiment, a b* color value of less than 15 can be achieved wherein the poly(trimethylene furandicarboxylate) polymer is free of blue pigments and/or free of optical brighteners. In another embodiment, a b* color value of less than 15 can be achieved wherein the poly(trimethylene furandicarboxylate) polymer contains one or more blue pigments and/or one or more optical brighteners. Suitable blue pigments can include, for example, anthraquinone. Suitable optical brighteners can include, for example, thiopene or TELALUX® KS1P pigment. Blue pigments and optical brighteners are commercially available.

In some embodiments, a composition comprising poly(trimethylene furandicarboxylate) polymer can also comprise one or more additives such as thermal stabilizers, UV absorbers, antioxidants, nucleating agents, process aides (plasticizers), toners/optical brighteners, oxygen barrier additives, chain extenders, chain terminators, multifunctional branching agents, reheat agents, light blocking agents or a combination thereof.

The PTF polymer disclosed herein is suitable for forming a variety of shaped articles, including films, sheets, tubes, preforms, molded articles, containers and the like. Suitable processes for forming the articles are known and include extrusion, extrusion blow molding, melt casting, injection molding, stretch blow molding, and thermoforming.

## EXAMPLES

Unless otherwise specifically stated, all ingredients are available from the Sigma-Aldrich Chemical Company,

St. Louis, Missouri.

2,5-furan dicarboxylic acid (FDCA) and 2,5-furan dicarboxylic dimethyl ester (FDME) were obtained from Sarchem Laboratories Inc, Farmingdale, NJ .

1,3-propanediol (BioPDO™) was obtained from DuPont Tate & Lyle LLC. The abbreviation "PDO" is used throughout the examples for this ingredient.

Titanium(IV)isopropoxide (Tyzor® TPT) and tetra n-butyl titanate (Tyzor® TBT) were obtained from Aldrich.

Butylstannoic acid (Fascat® 9100) was obtained from PMC Organometallix. REACTHEAT BLUE-2 (titanium nitride dispersion) was obtained from ColorMatrix, Berea, OH.

Unless otherwise noted, all materials were used as received.

As used herein, "Comp. Ex." Means Comparative Example; "Ex." means Example.

## TEST METHODS

### Color Measurement

A Hunterlab COLORQUEST™ Spectrocolorimeter (Reston, Virginia) was used to measure the color of the crystallized PTF polymers.. The color data was obtained at an observer angle of 10 degrees with Illuminant D65. Color is measured in terms of the tristimulus color scale, the CIE L* a* b*: the color value (L*) corresponds to the lightness or darkness of a sample, the color value (a*) on a red-green scale, and the color value (b*) on a yellow-blue scale. The reported color values are in general for the polymers that were crystallized at 115-125°C for overnight in an oven under vacuum. The whiteness index (WI) was a calculated value from the equation WI = L*- 3b.

### Thermal Analysis

Glass transition temperature ($T_g$), melting point ($T_m$) and enthalpy ($\Delta H_m$) were determined for crystalline polymers by differential scanning calorimetry (DSC) performed according to ASTM D3418-08. DSC thermograms were recorded using a DSC Q2000 from TA Instruments. 3 to 4 milligram (mg) PTF specimens were heated from 0°C to 230°C at a heating rate of 10°C/min in heat-cool-reheat temperature profile with 3 minutes hold at 220°C. The percent crystallinity was calculated by using the heat of melting and by taking the $\Delta H°_m$ value of 141.7 J/g as reported in literature reference, Polymer 62, 28, 2015.

### Isothermal crystallization

About 2 to 3 mg PTF specimens were heated from RT to 230°C at a heating rate of 30°C/min, held for 3 minutes, and was then cooled at 30°C/min to 0°C to obtain amorphous PTF (quenching in DSC instrument). Quenched specimens were then fast heated to a crystallization temperature of 110°C to 120°C and held there for 2-4 hours. A single heat experiment was then applied to the crystallized specimen to examine the crystallinity.

### Molecular Weight by Size Exclusion Chromatography

A size exclusion chromatography (SEC) system, Alliance 2695™ (Waters Corporation, Milford, MA), was provided with a Waters 2414™ differential refractive index detector, a multi-angle light scattering photometer DAWN Heleos (Wyatt Technologies, Santa Barbara, CA), and a VISCOSTAR II™ differential capillary viscometer detector (Wyatt). The software for data acquisition and reduction was ASTRA® version 6.1 by Wyatt. The columns used were two Shodex GPC HFIP-806M ™ styrene-divinyl benzene columns with an exclusion limit of $2 \times 10^7$ and 8,000/30 cm theoretical plates; and one Shodex GPC HFIP-804M ™ styrene-divinyl benzene column with an exclusion limit 2 x $10^5$ and 10,000/30cm theoretical plates.

The specimen was dissolved in 1,1,1,3,3,3-hexafluoro-2-propanol (HFIP) containing 0.01 M sodium trifluoroacetate by mixing at room temperature with moderate agitation for four hours followed by filtration through a 0.45 μm PTFE filter. Concentration of the solution was circa 2 mg/mL.

Data was taken with the chromatograph set at 35°C, with a flow rate of 0.5 mL/min. The injection volume was 100 μL. The run time was 80 min. Data reduction was performed incorporating data from all three detectors described above. Eight scattering angles were employed with the light scattering detector. No standards for column calibration were involved in the data processing. The weight average molecular weight ($M_w$) of the polymers are reported.

### Molecular Weight by Intrinsic Viscosity

Intrinsic viscosity (IV) was determined using the Goodyear R-103B Equivalent IV method, using PET T-3,

DUPONT™ SELAR® PT-X250, DUPONT™ SORONA® 2864 as calibration standards on a VISCOTEK® Forced Flow Viscometer Model Y-501 C. Methylene chloride was the carrier solvent, and a 50/50 mixture of methylene chloride/trifluoro acetic acid was the polymer solvent. Samples were prepared at 0.4 %(w/v), and shaken overnight at room temperature.

**Number average molecular weight ($M_n$) and end group quantification by $^1$H (proton) NMR**

$^1$H NMR spectra were collected using a 700 MHz NMR on about 55 mg samples in 0.7 mL 1,1,2,2-tetrachlorethane-d2 (tce-d2) at 110°C using an acquisition time of 4.68 sec, a 90 degree pulse, and a recycle delay of 30 sec, and with 16 transients averaged.

$^1$H NMR Calculation Methods

Samples were integrated and mole percentage calculated as is standard in the art. The peak assignments for the PTF polymer are shown below in TABLE 1.

**TABLE 1**

| δ (ppm) | Description |
|---|---|
| 9.75 | Aldehyde end |
| 7.58/6.51 | Decarboxylated furan |
| 7.28 | Furandicarboxylate |
| 6.9 | Furandicarboxylate-PDO cyclic dimer |
| 4.82 & 5.35-5.45 | Allyl ends |
| 4.2-4.75 | Ester |
| 3.96 | Methyl ester |
| 3.81 | Unreacted propanediol |
| 3.75 | Propanediol hydroxyl end |
| 3.62 | Ether backbone |
| 3.48 | Ether end |
| 7.55 | Furancarboxylic acid end (derivatized with trifluoroacetic anhydride) |

**Method for Determining Total Amount of Cyclic Esters in Poly(trimethylene-2,5-furandicarboxylate) by $^1$H NMR**

As shown in Table 1, furan ring hydrogens of cyclic dimer (δ 6.89) and furan ring hydrogens of PTF polymer (δ 7.2) have different chemical shifts. The weight percent of cyclic dimer was calculated using the following equations:

$$Molecular\ wt\ of\ cyclic\ dimer = \frac{\boldsymbol{nI}\ of\ furan\ ring\ hydrogens\ of\ cyclic\ dimer * 392}{sum\ of\ \boldsymbol{nI}\ of\ polymer\ ends}$$

$$Cyclic\ dimer\ wt\ \% = \frac{Molecular\ wt\ of\ cyclic\ dimer * 100}{sum\ of\ molecular\ weights\ of\ polymer\ and\ cyclic\ dimer}$$

***nI*** *= Normalized integral value*

**Comparative Example A**

**Synthesis of poly(trimethylene-2,5-furandicarboxylate) (PTF)**

The transesterification temperature used in this Comparative Example was 185-245 °C.

2,5-furandicarboxylate dimethyl ester (27 kg), 1,3-propanediol (20.08 kg), and titanium (IV) tetrabutoxide (40.8 g) were charged to a 15-gal stainless steel autoclave equipped with an agitator, oil-heated jacket and condenser on the vent line. A nitrogen purge was applied and stirring was commenced at 50 rpm to form a slurry. While stirring, the autoclave was subject to three cycles of pressurization of 345 kilopascal (50 psi) of nitrogen followed by a pressure leak check at 414 kilopascals (60 psi). A weak nitrogen purge was then established to maintain an inert atmosphere. While the autoclave was heated to the set point of 240°C methanol evolution began at a batch temperature of 175°C. Methanol distillation continued for 180 minutes during which the batch temperature increased from 185 to 245°C. At this time a vacuum ramp was initiated that during 30 minutes reduced the pressure from 760 torr (101.3 kilopascal to 110 torr (14.66 kPa) (pumping through the column) and over the next 2 hours from 110 torr to 0.7 torr (pumping through a separate vent line to the vacuum pump). The mixture, when at 0.7 torr was left under vacuum and stirring for 2 hours. During this time, the agitator speed was gradually reduced from 50 rpm to 20 rpm, after which nitrogen was used to pressurize the vessel back to 760 torr.

The PTF polymer was recovered by pressurizing the autoclave to 345 kilopascal (50 psi) and pushing the melt through an exit valve at the bottom of the vessel into a melt gear pump, die, and water quench bath to form strands. The strands were strung through a pelletizer, equipped with an air jet to dry the polymer free from moisture, cutting the polymer strand into chips about 3 mm long and about 2 mm in diameter.

The pelletized polymer was initially crystallized by placing the material in a vacuum rotary tumble dryer, subsequently heating the pellets left under vacuum to 110°C for 6 hours. The polymer was characterized by proton NMR, DSC, Intrinsic Viscosity, SEC, and Spectrophotometer and the results are reported in Table 2 and 3.

**Comparative Example B**

**Solid Phase Polymerization of the PTF Polymer of Comparative Example A**

The pelletized and crystallized PTF polymer was prepared as described in Comparative Example A. The crystallized polymer was heated in a rotary tumble dryer at a temperature of 165°C and the pellets left under nitrogen purge condition for 154 hours to build high molecular weight. The oven was turned off and the pellets allowed to cool. The solid state polymerized polymer was analyzed and the results are reported in Table 2 and 3.

**TABLE 2**

| | Comp. Ex. A | Comp. Ex. B |
|---|---|---|
| $M_n$ (NMR), g/mole | 13750 | 23360 |
| Mw (SEC), g/mole | ND | 44410 |
| IV, dL/g | 0.657 | 0.91 |
| Hydroxyl ends, meq/kg | 125 | 72.3 |
| Carboxylic acid ends, meg/kg | 7 | 3 |
| Allyl ends,meq/kg | 25 | 14 |
| Decarboxylated ends, meq/kg | 10 | 6 |
| Methyl ester ends, meq/kg | 0 | 0 |
| Di-PDO ends, meq/kg | 20 | 19 |
| Di-PDO backbone, wt% | 3.4 | 3.5 |
| Cyclic dimer, wt% | 0.3 | 0.2 |
| Crystallized polymer color | L* 63.7 a*5.5 b*21.6 WI = - 1.1 | L* 61.2 a* 5.8 b* 18.8 WI = 4.8 |
| ND=not determined | | |

**TABLE 3**

| Properties | Comp. Ex. A | Comp. Ex. B |
|---|---|---|
| $T_g$ from 2nd heat, °C | 53.1 | 55.6 |
| $T_{cc}$ or $T_c$ from melt, °C | none | none |
| $T_m$ for major peak from 1st heat, °C | 166.8 | 175 |
| $\Delta H_m$ from 1st peak, J/g | 42.2 | 65.2 |
| Degree of crystallinity, % | 30 | 46 |
| Cold crystallization half time ($t_{1/2}$) at 118 °C for 4h, min | ND | 123 |
| $T_g$ after crystallization, °C | ND | 55.3 |
| $T_m$ after crystallization, °C | ND | 132, 155.7 |
| $\Delta H_m$ after crystallization, J/g | ND | 40.5 |
| Degree of crystallinity, % | ND | 28 |
| ND= not determined | | |

Comparative Examples A and B illustrate the problems associated with the formation of poly(trimethylene furandicarboxylate) using polycondensation techniques typical of polyethylene terephthalate formation, followed by solid phase polymerization, i.e., (i) very long solid state polymerization times (>150 hours) to build desired high molecular weight PTF polymer; (ii) low melt temperature of the crystallized polymer melt product; (iii) high levels of di-PDO in the polymer backbone and at the chain ends that can alter the properties of the polymer and stability; (iv) low L* and high b* color values of the resin; (v) the melt polymer as prepared is amorphous having no melt temperature during heat cycle and no crystallization peak from melt upon cooling; (vi) the crystallized polymer has very slow thermal crystallization rate as indicated by the cold crystallization half time; and (vii) significant decrease in melt temperature of the solid state polymer after isothermal crystallization as a result of low degree of crystallinity and high levels of di-PDO in the polymer backbone.

**Comparative Example C**

The Comparative Example C differs from Comparative Example A in batch size and the transesterification temperature.

2,5-Furandicarboxylate dimethyl ester (60 g, 0.32 mol), BioPDO™ (1 ,3-propanediol, 44.6g, 0.59 mol) and titanium(IV)isopropoxide (200 ppm of titanium based on weight of the polymer) were charged to a pre-dried 250 mL three necked round bottomed glass reactor fitted with an overhead stirrer equipped with a SS 304 half-moon stir rod, a distillation condenser and an inlet/outlet for nitrogen. A nitrogen blanket was applied to the flask which was kept at a temperature of 23°C. Stirring was commenced at 50 rpm to form a slurry. While stirring, the flask was evacuated to 0.13 MPa and then pressurized with $N_2$, for a total of three cycles.

After the three cycles of evacuation and pressurization, the flask was immersed into a preheated liquid metal bath set at 190°C. The contents of the flask were stirred for 10 min after placing it in the liquid metal bath while purging with $N_2$ gas at slow rate, allowing the solid ingredients to melt. The actual temperature of the reaction medium was slightly lower by 5 to 10°C than the metal bath set temperature. Next, the stirring speed was increased to 180 rpm. The flask was initially held at 190°C for an hour and then the set temperature was increased to 210 °C for another 1.5 hour while stirring at 180 rpm to distill off most of the methanol being formed in the reaction. After this transesterification step, the set temperature of the metal bath was increased to 250°C while reducing the pressure of the reactor slowly from about atmospheric to about 900 mtorr for a period of 45 minutes. A major portion of the excess PDO present in the reactor was removed while the reaction mixture was at 250°C. When the vacuum was at a maximum (typically 150-250 mtorr) and the polycondensation reaction was continued at 250°C for 3 hours while removing the reaction byproduct.

The produced polymer was recovered from the flask after being cooled to room temperature. The recovered polymer was chopped into pellets using a Wiley mill that was cooled with liquid nitrogen. The polymer pellets were dried in an oven under vacuum and a weak nitrogen stream at 110°C overnight to crystallize the pellets. The process conditions and the properties of the crystallized polymer are reported in Table 4.

**Comparative Example D**

The PTF polymer was prepared as described in Comparative Example C except that the 2,5-furandicarboxylate dimethyl ester was replaced with 2,5-furan dicarboxylic acid. The process conditions and the properties of the polymer are reported in Table 4.

**TABLE 4**

| | Comp. Ex. C | Comp. Ex. D |
|---|---|---|
| PDO/FDME ratio | 1.8:1 | 1.8:1 |
| Catalyst type and amount | TPT 200 ppm | TPT, 200 ppm |
| Transesterification set temp and time | 190-210°C, 2.5 h | 190-210°C, 2.5 h |
| Polycondensation set temp, time | 250°C, 3 h | 250°C, 3.5 h |
| Hydroxyl ends, meq/kg | 27 | 30 |
| Carboxylic acid ends, meg/kg | 18 | 11 |
| Allyl ends,meq/kg | 28 | 15 |
| Decarboxylated ends, meq/kg | 1 | 6 |
| Methyl ester ends, meg/kg | none | -NA |
| Di-PDO ends, meq/kg | 6 | 18 |
| Di-PDO backbone, wt% | 1.4 | 2. |
| Cyclic dimer, wt% | 0.3 | 0.4 |
| IV, dL/g | 0.98 | 0.99 |
| $M_n$ (NMR), q/mole | 24470 | 24910 |
| $M_w$ (SEC), dalton | 48610 | 61380 |
| $T_g$ from second heat | 58.4 | 57.3 |
| $T_m$ ($\Delta$H) from first heat | 130;168 (38.4 J/g) | 130; 158 (32 J/g) |
| Crystallized polymer color | L*67.2 a* 3.9 b*19.9 WI = 7.5 | L* 58.5 a* 2.0 b* 11.5 WI = 24 |
| Polymer color, visual appearance | yellow | dark black |
| NA= not applicable | | |

These Comparative Examples show that the polymers obtained under the melt conditions described have di-PDO levels in the polymer backbone more than 1 wt% and significantly discolored, as seen by their visual appearance, which is undesirable for most commercial uses. In the case of Comparative Example D, the b* value seems to be lower than that for Comparative Example C, which may be due to the masking effect of black color (very low L* value) on yellowness.

**Example 1**

A prepolymer was first prepared as described below: 2,5-furandicarboxylate dimethyl ester (60 g, 0.326 mol) and 1,3-propanediol (37.2g, 0.489 mol) at 1.5 molar ratio of 1,3-propanediol to 2,5-furandicarboxylate dimethyl ester were charged to a pre-dried 250 mL three necked round bottomed glass reactor fitted with an overhead stirrer equipped with a SS 304 half-moon stir rod, a distillation condenser and an inlet/outlet for nitrogen. Tetra n-butyltitanate was diluted by adding 0.23 mL to 10 mL of 1,3-propanediol and 1 mL of this solution (50 ppm of titanium based on weight of the polymer) was added to the flask. A nitrogen blanket was applied to the flask which was kept at a temperature of 23°C. Stirring was commenced at 50 rpm to form a slurry. While stirring, the flask was evacuated to 0.13 MPa and then pressurized with $N_2$, for a total of three cycles.

After the three cycles of evacuation and pressurization, the flask was immersed into a preheated liquid metal bath set at 190°C. The contents of the flask were stirred for 10 minutes after placing it in the liquid metal bath while purging with $N_2$ gas at slow rate, allowing the solid ingredients to melt. The actual temperature of the reaction medium

was slightly lower by 5 to 10°C than the metal bath set temperature. Next, the stirring speed was increased to 180 rpm. The transesterification reaction was conducted at set temperature of 190°C for 1 hour and 10 C for another hour while distilling off most of the methanol (24.5 mL) being formed in the reaction. After 2 hours, the pressure was reduced by applying vacuum slowly to 2.5 Torr (0.33 kPa) for a period of 45 min. After 45 minutes, full vacuum (150-220 mTorr) was applied for 90 minutes to remove excess PDO from the reaction. The reaction temperature was maintained not to exceed 210°C and this step is referred as prepolycondensation step.

The reaction mixture was cooled to room temperature while bringing the pressure to atmospheric pressure. A small amount of prepolymer sample was collected for analyses and the rest of the material was reheated to melt, and the polycondensation reaction was conducted at bath set temperature of 250 °C for 3 hours under full vacuum conditions. The polymer was recovered and crystallized in vacuum oven at 120 °C for overnight. The properties of the prepolymer and the final polymer are reported in Table 5.

**Example 2**

The Example 2 was scaled-up from 250 mL (Example 1) to 3L reactor. The following amounts of the ingredients were charged into a 3L three-neck glass reactor: 2,5-furandicarboxylate dimethyl ester (1.126 kg;6.12 mol), 1,3-propanediol (0.698 kg, 9.176 mol) and tetra n-butyltitanate (0.43 g ; 50 ppm of titanium based on weight of the polymer). The mole ratio of PDO to FDME was 1.5. The flask was placed in a metal bath which was preheated to 160 °C. The reaction mixture was stirred at 100 rpm for 10 minutes to obtain homogeneous solution under nitrogen atmosphere and then the metal bath temperature was raised to 190°C to initiate transesterification reaction. The reaction was continued at this temperature for 2 h, the temperature was raised to 210°C and the reaction was continued for another 30 min. A vacuum ramp was started while stopping the nitrogen purge. Pressure was gradually decreased from atmospheric to a final low pressure of 0.1 mm Hg to 1.0 mm Hg absolute. The full vacuum and the temperature of 190 °C were maintained for 60 min while removing the excess PDO. The solid prepolymer was recovered from the flask

A small portion of the prepolymer (60 g) was charged into 250 mL three-neck flask and the flask was placed into a metal bath which was preheated to 190 °C. When the full vacuum was reached the temperature of the metal bath was raised to 240 °C and the polycondensation reaction was continued under these conditions for 4 hours. The polymer after melt polymerization was recovered, crystallized and analyzed. The properties of the prepolymer and the final polymer are reported in Table 5.

Example 3

The transesterification reaction and prepolycondensaton step were conducted at lower temperatures as described below. The following amounts of the ingredients were charged into a 3L three-neck glass reactor: 2,5-furandicarboxylate dimethyl ester (1.408 kg ;7.64 mol) and 1,3-propanediol (0.873 kg; 11.47 mol). The mole ratio of PDO to FDME was 1.5. The flask was placed in a metal bath which was preheated to 160 °C. The reaction mixture was stirred at 100 rpm for 10 minutes to obtain homogeneous solution under nitrogen atmosphere. The catalyst tetra n-butyltitanate (1.097 g ; 110 ppm of titanium based on weight of the polymer) was added at this temperature. The metal bath temperature was raised to 170°C to initiate transesterification reaction. The reaction was continued at this temperature for 100 minutes, the temperature was raised to 180°C and the reaction was continued for 40 min. The temperature again was raised to 190 °C and the reaction was continued for another 40 min. A vacuum ramp was started while stopping the nitrogen purge. Pressure was gradually decreased from atmospheric to a final low pressure of 0.1 mm Hg to 1.0 mm Hg absolute. The full vacuum and the temperature of 190 °C were maintained for 60 min while removing the excess PDO. The solid prepolymer was recovered from the flask.

A small portion of the prepolymer (60 g) was charged into 250 mL three-neck flask and the flask was placed into a metal bath which was preheated to 190 °C. When the full vacuum was reached the temperature of the metal bath was raised to 240 °C and the polycondensation reaction was continued under these conditions for 4 hours. The polymer after melt polymerization was recovered, crystallized and analyzed. The properties of the prepolymer and the final polymer are reported in Table 5.

**TABLE 5**

| Properties | Example 1 | Example 2 | Example 3 |
|---|---|---|---|
| | Prepolymer | | |
| Mn (NMR), g/mole | 5330 | 2360 | 3260 |
| Degree of polymerization (DP) | ~ 27 | ~ 12 | ~16 |

(continued)

| Properties | Example 1 | Example 2 | Example 3 |
|---|---|---|---|
| | Prepolymer | | |
| Tm ($\Delta H_m$), °C/J/g | 176.5 (47) | 170.2 (61) | 175.8 |
| Hydroxyl ends, meq/kg | 372 | 789 | 537 |
| Carboxylic acid ends, meg/kg | none | none | none |
| Allyl ends, meq/kg | none | none | none |
| Decarboxylated ends, meg/kg | none | none | none |
| Methyl ester ends, meg/kg | 3 | 54 | 74 |
| Di-PDO ends, meq/kg | none | none | none |
| Di-PDO backbone, wt% | 0.3 | 0.3 | 0.1 |
| Cyclic dimer, wt% | 0.4 | 0.4 | 0.4 |
| | Polymer | | |
| Hydroxyl ends, meq/kg | 65 | 73 | 54 |
| Carboxylic acid ends, meg/kg | 6 | 9 | 18 |
| Allyl ends,meq/kg | 6 | 6 | 7 |
| Methyl ester ends, meq/kg | none | 7 | 7 |
| Decarboxy ends, meq/kg | 6 | 1 | 7 |
| Di-PDO ends, meq/kg | none | none | none |
| Di-PDO backbone, wt% | 0.4 | 0.3 | 0.2 |
| Cyclic dimer, wt% | 0.4 | 0.5 | 0.5 |
| IV, dL/g | 0.95 | 0.83 | 0.97 |
| $M_n$ (NMR), q/mole | 23750 | 20860 | 21420 |
| $M_w$ (SEC), dalton | 46300 | 38920 | 46000 |
| DP | 108 | 99 | 109 |
| Crystallized polymer color | L* 69.2<br>a* -1.1<br>b* 10.6<br>WI=37 | L* 74.0<br>a* -1.4<br>b* 5.5<br>WI=58 | L* 71.5<br>a* 0.4<br>b* 12.5<br>WI=34 |

The prepolymers prepared as described in Examples 1-3 surprisingly had very low levels of di-PDO. Lowering the temperature during transesterification and prepolycondensation had dramatic effect in reducing the formation of ether. Controlling the temperature during transesterification and prepolycondensation, the amount of di-PDO can be managed without adding any additives.. Though the transesterification conditions were not optimized in 3L, it is highly feasible to reduce the levels of methyl ester in the prepolymers. Compared to Comparative Example A (3.4 wt%), the PTF melt polymers of Example 1-3 had very low levels of di-PDO (as low as 0.17wt%) in the polymer backbone and undetectable at the chain ends. It appears from the data that the ether formation occurs more in transesterification/prepolycondensation steps than in the polycondensation step. The higher temperature during polycondensation has little effect on di-PDO formation which may be due the absence of excessive PDO that limits the side reactions. In addition, the polymers of Example 1-3 had lower carboxylic acid and ally ends indicating less polymer degradation and side reactions resulting the polymers with higher stability and improved color.. These three Examples of the present invention demonstrate that using the disclosed process conditions and titanium catalyst loading, high molecular weight PTF polymer can be produced in melt polymerization process with excellent properties and thereby eliminating the expensive and time consuming solid state polymerization step.

**Examples 4 and 5**

The polymers of Example 4 and Example 5 were prepared as described for Example 1, with the following exceptions: the catalyst system was different, as shown in Table 6, and the polymers were prepared in one stage without cooling after prepolycondensation. In Example 4, a mixture of FDA (Food & Drug Administration) grade butylstannoic acid (Fascat® 9100) and tetra-n-butyltitanate (Tyzor® TBT) catalyst system (80 ppm of tin/20 ppm of titanium) was used. In Example 5, a mixture of butyl stannoic acid and titanium nitride (REACTHEAT BLUE-2) (90 ppm of tin/10 ppm of titanium) was used.

The polymers after melt polymerization were crystallized and analyzed. The process and properties of the polymers are reported in Table 6.

**TABLE 6**

| | Example 4 | Example 5 |
|---|---|---|
| PDO/FDME ratio | 1.5:1 | 1.5:1 |
| Mixed Catalyst s | 80/20 Sn/Ti | 90/10 Sn/Ti |
| Transesterification set temp and time | 190°C, 2h | 190°C, 2 h |
| Precondensation set temp and time | 210°C, under reduced pressure for 2.15h | 210°C, under reduced pressure for 2.15h |
| Polycondensation set temp and time | 240°C, 4 h | 240°C, 4 h |
| Hydroxyl ends, meq/kg | 87 | 107 |
| Carboxylic acid ends, meg/kg | 9 | 6 |
| Allyl ends,meq/kg | 6 | 5 |
| Decarboxylated ends, meq/kg | 2 | 2 |
| Methyl ester ends, meq/kg | 2 | 2 |
| Di-PDO ends, meq/kg | undetected | undetected |
| Di-PDO backbone, wt% | 0.2 | 0.2 |
| Cyclic dimer, wt% | 0.5 | 0.4 |
| IV, dL/g | 0.73 | 0.70 |
| $M_n$ (NMR), g/mole | 18850 | 16440 |
| $M_w$ (SEC), dalton | 36890 | 30370 |
| Crystallized polymer color | L* 72<br>a*-1.1<br>b* 8.8<br>WI = 46 | L* 69<br>a* -2.1<br>b* 2.9<br>WI = 60 |

The properties of the PTF polymers of Example 2-5, were analyzed by DSC before and after their respective isothermal cold crystallization half times were measured. This data is compared with that for the solid state PTF polymer of Comparative Example B in Tables 7 and 8.

**TABLE 7**

| | 1st Heat @10°C/min | 2nd Heat @1 °C/min | | |
|---|---|---|---|---|
| PTF polymer | Major $T_m$ / $\Delta H_m$ (°C/J/g) | $T_{cc}$ / $\Delta H_{CC}$ (°C/J/g) | Onset of Cold Crystallization (°C) | Major $T_m$ / $\Delta$Hm (°C/J/g) |
| Comp. Ex. B | 175/65 | Not determined | | |

(continued)

| | 1st Heat @10°C/min | 2nd Heat @1 °C/min | | |
|---|---|---|---|---|
| PTF polymer | Major $T_m$ / $\Delta H_m$ (°C/J/g) | $T_{cc}$ / $\Delta H_{CC}$ (°C/J/g) | Onset of Cold Crystallization (°C) | Major $T_m$ / $\Delta$Hm (°C/J/g) |
| Example 2 | 170/49 | 119/40 | 109 | 179/40 |
| Example 4 | 170/47 | 128/36 | 114 | 180/36 |
| Example 5 | 171/49 | 124/40 | 112 | 180.0/40 |

When crystallized PTF polymers of Example 2, Example 4, and Example 5 were heated at 1 °C/min rather than 10 °C/ min, distinct cold crystallization temperature ($T_{cc}$) peaks around 119 -128°C were observed. In addition, Tthe melt temperature of the polymers are higher by almost 10 °C when the polymers were crystallized at slower heat ratesuggesting more uniform crystal morphology. This higher melt temperature of the polymers could be advantageous to improve the solid state polymerization rate faster.

**TABLE 8**

| PTF polymer | $T_{1/2}$@120°C (min) | $T_g$ (After crystallization @ 120°C/2h) (°C) | Major $T_m$ / $\Delta H_m$ After crystallization@120°C/ 2h (°C / J/g) |
|---|---|---|---|
| Comp. Ex. B | 123* | 55.3 | 156/40 |
| Example 2 | 19 | 60.5 | 173/42 |
| Example 3 | 11 | 61.3 | 171/46 |
| Example 4 | 35 | 61.5 | 173/41 |
| Example 5 | 29 | 60.9 | 174/43 |
| *Isothermal crystallization temperature is 118°C | | | |

The data in Table 8 indicates that the PTF polymers of Example 2-5, have significantly lower crystallization half times (faster crystallization kinetics), higher glass transition temperatures and higher melt temperatures than the solid state polymerized polymer of Comparative Example B. The lower the di-PDO levels in the polymer backbone helps the polymer to crystallize at a faster rate. The estimated percent crystallinity of the PTF polymers of Example 2-5, are in the range of 29 - 30%.

Comparative Example E

An attempt was made in making a prepolymer in a 3L three-neck glass reactor: by charging 2,5-furandicarboxylate dimethyl ester (1.300 kg ;7.06 mol), 1,4-butanediol (0.955 kg; 10.6 mol) and tetra n-butyltitanate (0.21 g ; 50 ppm of titanium based on weight of the polymer). The mole ratio of 1,4-butanediol to FDME was 1.5. The flask was placed in a metal bath which was preheated to 160 °C. The reaction mixture was stirred at 100 rpm for 10 minutes to obtain homogeneous solution under nitrogen atmosphere. The metal bath temperature was raised to 180 °C and the transesterification reaction was continued at this temperature for 40 minutes, the temperature was raised to 200 °C and the reaction was continued for another 40 min. During this time 600 mL of the distillate was collected which is more than the theoretical amount (571 mL) of methanol. Though the distillate was still coming, the vacuum was applied to remove excess of 1,-4-butanediol. However, we were unable to lower the vacuum due to generation of low volatile gaseous product, tetrahydrofuran (THF), and therefore the prepolycondensation process was terminated. When analyzed the distillate, we found that the distillate contained significant amount of THF (11.4 wt%) along with 83.8 wt% methanol, and 3.5 wt% 1,4-butanediol. This comparative example demonstrates that the transesterification and prepolycondensation process conditions that were employed are unique to 1,3-propanediol based PTF polymer and cannot be implemented to 1,4-butanediol based poly(butylene 2,5-furandicarboxylate) polymer.

## Claims

**1.** A composition comprising:

poly(trimethylene furandicarboxylate) polymer comprising:

ix) 95 to 99.9% by weight of trimethylene furandicarboxylate repeat units;
x) less than or equal to 1 % by weight of di-PDO repeat units in the polymer backbone;
xi) less than or equal to 20 milliequivalents of allyl end group per kilogram of polymer;
xii) less than or equal to 25 milliequivalents of carboxylic acid end groups per kilogram of polymer;
xiii) less than or equal to 15 milliequivalents of alkyl ester end groups per kilogram of polymer;
xiv) less than or equal to 1 % by weight of cyclic dimer oligoester;
xv) less than or equal to 10 milliequivalents of di-PDO end groups per kilogram of polymer; and
xvi) an intrinsic viscosity in the range of from 0.60 to 1.2 dL/g;

wherein the percentages by weight are based on the total weight of the poly(trimethylene furandicarboxylate) polymer in the composition.

**2.** The composition of claim 1,:
wherein the poly(trimethylene furandicarboxylate) polymer comprises:

xii) less than or equal to 15 milliequivalents of carboxylic acid end groups per kilogram of polymer;
xiii) less than or equal to 10 milliequivalents of alkyl ester end groups per kilogram of polymer;
xvi) an intrinsic viscosity in the range of from 0.70 to 1.2 dL/g;

wherein the percentages by weight are based on the total weight of the poly(trimethylene furandicarboxylate) polymer in the composition.

**3.** The composition of claim 2, wherein the composition has a b* color value of less than 15, preferably less than 10, as determined by spectrocolorimetry.

**4.** The composition of claim 2 or 3, wherein the composition has an L* color value greater than or equal to 60, as determined by spectrocolorimetry.

**5.** The composition of claim 2, further comprising one or more additives comprising a thermal stabilizer, a UV absorber, an antioxidant, a nucleating agent, a process aid, a toner/optical brightener, an oxygen barrier additive, a chain extender, a chain terminator, a reheat agent, or a light blocking agent.

**6.** The composition of any one of claims 2 to 5, wherein the poly(trimethylene furandicarboxylate) polymer is poly(trimethylene 2,5-furandicarboxylate), and the alkyl ester end groups are dimethyl ester groups.

**7.** A process comprising:

a) contacting a mixture comprising furandicarboxylic acid dialkyl ester, 1,3-propanediol, and a metal catalyst at a temperature in the range of from 160°C to 220°C to form a prepolymer,

wherein the mole ratio of the furandicarboxylic acid dialkyl ester to the 1,3-propanediol is in the range of from 1:1.3 to 1:2.2 and
the concentration of metal catalyst is in the range of from 20 ppm to 400 ppm, based on the total weight of the mixture;

b) removing at least a portion of the unreacted 1,3-propanediol; and
c) heating the prepolymer to a temperature in the range of from 230°C to 260°C under reduced pressure to form poly(trimethylene furandicarboxylate) polymer while removing 1,3-propanediol;

wherein at least 50% by weight of the excess 1,3-propanediol is removed in step b).

**8.** The process of claim 7, wherein the poly(trimethylene furandicarboxylate) polymer has a b* color value of less than 15, determined by spectrocolorimetry.

**9.** The process of claim 7 or 8, wherein the poly(trimethylene furandicarboxylate) polymer has an intrinsic viscosity in the range of from 0.70 to 1.2 dL/g.

**10.** The process of any one of claims 7 to 9, wherein the process is batch, semi-continuous, or continuous.

**11.** The process of any one of claims 7 to 10, wherein at least 90% by weight of the excess 1 ,3-propanediol is removed in step b).

**12.** The process of any one of claims 7 to 11, wherein the furandicarboxylic acid dialkyl ester is 2,5-furandicarboxylate dimethyl ester.

**13.** The process of any one of claims 7 to 12, wherein the poly(trimethylene furandicarboxylate) polymer has a crystallization half time measured at 120°C less than or equal to 100 minutes.

**14.** The process of any one of claims 7 to 13, wherein step a) further comprises concurrently removing at least a portion of the alkyl alcohol formed.

**15.** The process of any one of claims 7 to 14, further comprising step d) crystallizing the poly(trimethylene furandicarboxylate) polymer at a temperature in the range of from about 110°C to about 130°C to obtain crystallized poly(trimethylene furandicarboxylate) polymer.

## Patentansprüche

**1.** Zusammensetzung, die Folgendes umfasst:
ein Poly(trimethylenfurandicarboxylat)-Polymer, das Folgendes umfasst:

ix) 95 bis 99,9 Gew.-% Trimethylenfurandicarboxylat-Grundeinheiten;
x) 1 Gew.-% oder weniger Di-PDO-Grundeinheiten in der Polymer-Hauptkette;
xi) 20 Milliäquivalente oder weniger Allyl-Endgruppen pro Kilogramm des Polymers;
xii) 25 Milliäquivalente oder weniger Carbonsäure-Endgruppen pro Kilogramm des Polymers;
xiii) 15 Milliäquivalente oder weniger Alkylester-Endgruppen pro Kilogramm des Polymers;
xiv) 1 Gew.-% oder weniger eines zyklischen dimeren Oligoesters;
xv) 10 Milliäquivalente oder weniger Di-PDO-Endgruppen pro Kilogramm des Polymers; und
xvi) eine intrinsische Viskosität im Bereich von 0,60 bis 1,2 dl/g;

wobei die Gewichtsprozentangaben auf das Gesamtgewicht des Poly(trimethylenfurandicarboxylat)-Polymers in der Zusammensetzung bezogen sind.

**2.** Zusammensetzung nach Anspruch 1,
wobei das Poly(trimethylenfurandicarboxylat)polymer Folgendes umfasst:

xii) 15 Milliäquivalente oder weniger Carbonsäure-Endgruppen pro Kilogramm des Polymers;
xiii) 10 Milliäquivalente oder weniger Alkylester-Endgruppen pro Kilogramm des Polymers;
xvi) eine Grenzviskosität im Bereich von 0,70 bis 1,2 dl/g;

wobei die Gewichtsprozentangaben auf das Gesamtgewicht des Poly(trimethylenfurandicarboxylat)-Polymers in der Zusammensetzung bezogen sind.

**3.** Zusammensetzung nach Anspruch 2, wobei die Zusammensetzung einen durch Spektralkolorimetrie bestimmten b*-Farbwert von weniger als 15, vorzugsweise weniger als 10, aufweist.

**4.** Zusammensetzung nach Anspruch 2 oder 3, wobei die Zusammensetzung einen durch Spektralkolorimetrie bestimmten L*-Farbwert von 60 oder mehr aufweist.

**5.** Zusammensetzung nach Anspruch 2, die weiters ein oder mehrere Additive umfasst, die einen Wärmestabilisator, einen UV-Absorber, ein Antioxidans, einen Keimbildner, eine Prozesshilfe, einen Toner/optischen Aufheller, ein Sauerstoffbarrieren-Additiv, einen Kettenverlängerer, ein Kettenterminator, einen Nacherwärmer oder einen Lichtblocker umfassen.

**6.** Zusammensetzung nach einem der Ansprüche 2 bis 5, wobei das Poly(trimethylenfurandicarboxylat)-Polymer Poly(trimethylen-2,5-furandicarboxylat) ist und die Alkylester-Endgruppen Dimethylester-Gruppen sind.

**7.** Verfahren, das Folgendes umfasst:

a) das Kontaktieren eines Gemischs, das Furandicarbonsäuredialkylester, 1,3-Propandiol und einen Metallkatalysator umfasst, bei einer Temperatur im Bereich von 160 °C bis 220 °C, um ein Präpolymer zu bilden,

wobei das Molverhältnis zwischen dem Furandicarbonsäuredialkylester und 1,3-Propandiol im Bereich von 1:1,3 und 1:2,2 liegt und
die Konzentration des Metallkatalysators im Bereich von 20 ppm und 400 ppm, bezogen auf das Gesamtgewicht des Gemischs, beträgt;

b) das Entfernen von zumindest einem Teil des nicht umgesetzten 1,3-Propandiols; und
c) das Erhitzen des Präpolymers auf eine Temperatur im Bereich von 230 °C bis 260 °C unter reduziertem Druck, um das Poly(trimethylenfurandicarboxylat)-Polymer zu bilden, während 1,3-Propandiol entfernt wird;

wobei zumindest 50 Gew.-% des überschüssigen 1,3-Propandiols in Schritt b) entfernt werden.

**8.** Verfahren nach Anspruch 7, wobei das Poly(trimethylenfurandicarboxylat)-Polymer einen durch Spektralkolorimetrie bestimmten b*-Farbwert von weniger als 15 aufweist.

**9.** Verfahren nach Anspruch 7 oder 8, wobei das Poly(trimethylenfurandicarboxylat)-Polymer eine Grenzviskosität im Bereich von 0,70 bis 1,2 dl/g aufweist.

**10.** Verfahren nach einem der Ansprüche 7 bis 9, wobei das Verfahren chargenbasiert, halbkontinuierlich oder kontinuierlich ist.

**11.** Verfahren nach einem der Ansprüche 7 bis 10, wobei zumindest 90 Gew.-% des überschüssigen 1,3-Propandiols in Schritt b) entfernt werden.

**12.** Verfahren nach einem der Ansprüche 7 bis 11, wobei der Furandicarbonsäuredialkylester 2,5-Furandicarboxylatdimethylester ist.

**13.** Verfahren nach einem der Ansprüche 7 bis 12, wobei das Poly(trimethylenfurandicarboxylat)-Polymer eine bei 120 °C gemessene Kristallisationshalbwertszeit von 100 min oder weniger aufweist.

**14.** Verfahren nach einem der Ansprüche 7 bis 13, wobei Schritt a) weiters das gleichzeitige Entfernen zumindest eines Teils des gebildeten Alkylalkohols umfasst.

**15.** Verfahren nach einem der Ansprüche 7 bis 14, das weiters Schritt d) das Kristallisieren des Poly(trimethylenfurandicarboxylat)-Polymers bei einer Temperatur im Bereich von etwa 110 °C bis etwa 130 °C umfasst, um ein kristallisiertes Poly(trimethylenfurandicarboxylat)-Polymer zu erhalten.

## Revendications

**1.** Composition comprenant :

un polymère de poly(furandicarboxylate de triméthylène) comprenant :

ix) de 95 à 99,9 % en poids de motifs de répétition de furandicarboxylate de triméthylène ;
x) au plus 1 % en poids de motifs répétitifs di-PDO dans le squelette de polymère ;
xi) au plus 20 milliéquivalents de groupe terminal allyle par kilogramme de polymère ;
xii) au plus 25 milliéquivalents de groupes terminaux acide carboxylique par kilogramme de polymère ;
xiii) au plus 15 milliéquivalents de groupes terminaux ester alkylique par kilogramme de polymère ;
xiv) au plus 1 % en poids d'oligoester de dimère cyclique ;
xv) au plus 10 milliéquivalents de groupes terminaux di-PDO par kilogramme de polymère ; et
xvi) une viscosité intrinsèque dans la plage de 0,60 à 1,2 dUg ;

dans laquelle les pourcentages en poids sont basés sur le poids total du polymère de poly(furandicarboxylate de triméthylène) dans la composition.

**2.** Composition selon la revendication 1,

dans laquelle le polymère de poly(furandicarboxylate de triméthylène) comprend :

xii) au plus 15 milliéquivalents de groupes terminaux acide carboxylique par kilogramme de polymère ;
xiii) au plus 10 milliéquivalents de groupes terminaux ester d'alkyle par kilogramme de polymère ;
xvi) une viscosité intrinsèque dans la plage de 0,70 à 1,2 dLg ;

dans laquelle les pourcentages en poids sont basés sur le poids total du polymère de poly(furandicarboxylate de triméthylène) dans la composition.

**3.** Composition selon la revendication 2, dans laquelle la composition présente une valeur de couleur b* inférieure à 15, de préférence inférieure à 10, telle que déterminée par spectrocolorimétrie.

**4.** Composition selon la revendication 2 ou 3, dans laquelle la composition présente une valeur de couleur L* supérieure ou égale à 60, telle que déterminée par spectrocolorimétrie.

**5.** Composition selon la revendication 2, comprenant en outre un ou plusieurs additifs comprenant un stabilisant thermique, un absorbeur d'UV, un antioxydant, un agent de nucléation, un adjuvant de traitement, un toner/azurant optique, un additif formant barrière contre l'oxygène, un allongeur de chaîne, un terminateur de chaîne, un agent de réchauffage ou un agent bloquant la lumière.

**6.** Composition selon l'une quelconque des revendications 2 à 5, dans laquelle le polymère de poly(furandicarboxylate de triméthylène) est le poly(2,5-furandicarboxylate de triméthylène), et les groupes terminaux ester alkylique sont des groupes ester diméthylique.

**7.** Procédé comprenant les étapes consistant à :

a) mettre en contact un mélange comprenant de l'ester de dialkyle d'acide furandicarboxylique, du 1,3-propanediol, et un catalyseur métallique à une température dans la plage de 160°C à 220°C pour former un prépolymère,

dans lequel le rapport molaire de l'ester dialkylique d'acide furandicarboxylique au 1,3-propanediol se situe dans la plage de 1:1,3 à 1:2,2 et
la concentration du catalyseur métallique est comprise entre 20 ppm et 400 ppm, sur la base du poids total du mélange ;

b) éliminer au moins une partie du 1,3-propanediol n'ayant pas réagi ; et
c) chauffer le prépolymère à une température dans la plage de 230°C à 260°C sous pression réduite pour former un polymère de poly(furandicarboxylate de triméthylène) tout en éliminant le 1,3-propanediol ;

dans lequel au moins 50 % en poids de l'excès de 1,3-propanediol est éliminé à l'étape b).

**8.** Procédé selon la revendication 7, dans lequel le polymère de poly(furandicarboxylate de triméthylène) présente une valeur de couleur b* inférieure à 15, déterminée par spectrocolorimétrie.

**9.** Procédé selon la revendication 7 ou 8, dans lequel le polymère de poly(furandicarboxylate de triméthylène) présente une viscosité intrinsèque dans la plage de 0,70 à 1,2 dL/g.

**10.** Procédé selon l'une quelconque des revendications 7 à 9, dans lequel le procédé est discontinu, semi-continu ou continu.

**11.** Procédé selon l'une quelconque des revendications 7 à 10, dans lequel au moins 90 % en poids du 1,3-propanediol en excès sont éliminés à l'étape b).

**12.** Procédé selon l'une quelconque des revendications 7 à 11, dans lequel l'ester dialkylique d'acide furandicarboxylique est l'ester diméthylique de 2,5-furandicarboxylate.

**13.** Procédé selon l'une quelconque des revendications 7 à 12, dans lequel le polymère de poly(furandicarboxylate de triméthylène) présente un demi-temps de cristallisation mesuré à 120°C inférieur ou égal à 100 minutes.

**14.** Procédé selon l'une quelconque des revendications 7 à 13, dans lequel l'étape a) comprend en outre l'élimination simultanée d'au moins une partie de l'alcool alkylique formé.

**15.** Procédé selon l'une quelconque des revendications 7 à 14, comprenant en outre l'étape d) de cristallisation du polymère de poly(furandicarboxylate de triméthylène) à une température dans la plage d'environ 110°C à environ 130°C pour obtenir un polymère de poly(furandicarboxylate de triméthylène) cristallisé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015095466 A